# EUROPEAN PATENT SPECIFICATION

(11) **EP 4 241 009 B1**
(45) Date of publication and mention of the grant of the patent: **31.12.2025**
(21) Application number: 21816520.7
(22) Date of filing: 03.11.2021
(51) Int. Cl.: F16L 27/06, F16L 5/02, E03C 1/122, F16L 27/04, F16L 37/52, F16L 47/18

(54) **JOINT FOR CONNECTING TWO PIPES OF A WATER DRAINAGE SYSTEM, IN PARTICULAR FOR WATER DRAINAGE SYSTEMS IN BUILDINGS**
VERBINDUNGSSTÜCK ZUM VERBINDEN ZWEIER LEITUNGEN EINES WASSERABFLUSSSYSTEMS, INSBESONDERE FÜR WASSERABFLUSSSYSTEME IN GEBÄUDEN
JOINT POUR RELIER DEUX TUYAUX D'UN SYSTÈME DE DRAINAGE D'EAU, EN PARTICULIER POUR DES SYSTÈMES DE DRAINAGE D'EAU DANS DES BÂTIMENTS

(30) Priority: 03.11.2020 IT 202000026164
(43) Date of publication of application: 13.09.2023
(73) Proprietor: Valsir S.p.A. A Socio Unico, 25078 Vestone (BS) (IT)
(72) Inventor: TIBERTI, Luigi, 25078 Vestone (BS) (IT); ZANCA, Nicola, 25078 Vestone (BS) (IT); ERRANTI, Paolo, 25078 Vestone (BS) (IT)
(74) Representative: Studio Torta S.p.A.
(86) International application number: PCT/IB2021/060170
(87) International publication number: WO 2022/097037

(56) References cited:
- EP-A1- 1 925 756
- EP-A1- 3 093 545
- AT-B- 222 958
- DE-A1- 2 547 755
- DE-B- 1 234 104

## Description

### CROSS-REFERENCE TO RELATED APPLICATIONS

This patent application claims priority from Italian patent application no. 102020000026164 filed on November 3, 2020.

### TECHNICAL FIELD

The present invention relates to a joint for connecting two pipes of a water drainage system, in particular for water drainage systems in buildings.

### BACKGROUND ART

The joint of the invention finds a preferred application in connecting a bathroom drain pipe to a common drain column that collects waste water from a plurality of users in a building.

In a building's water drainage system provided for collecting the water used by the various users in the building and conveying it outside, it is normally necessary to connect pipe sections which, being in turn fixed to structures in fixed positions, can be misaligned with each other.

The problem of the possible misalignment between pipe sections to be connected may arise, for example, when the drain pipes of the bathrooms of a building, located on different floors, are to be connected to a central drain column. The drain pipes of the various bathrooms pass through walls and therefore have fixed positions; and they have also to be connected to the drain column in predetermined positions. It is therefore clear that construction and/or installation defects can lead to misalignments between the drain pipes and the respective couplings on the drain column.

The problem is particularly evident in the case of prefabricated bathrooms, consisting of modules that are made in the factory and then transported to the construction site and installed in the building under construction.

However, similar problems are encountered in other conditions and in other contexts.

In order to solve the problem of a possible misalignment between pipe sections, it is known to use flexible rubber joints, which, by elastically deforming, can adapt to different conditions of use.

However, flexible joints of this type can be poorly mechanically resistant and therefore less reliable and durable.

In other applications, ball joints are used to connect pipes. For example, EP1925756A1 discloses an inspection device for pipe networks, comprising a central body having an upper inspection opening and two lateral ball joints connectable to respective pipes. The device is typically buried in the ground and only the inspection opening is flush with ground level and provided with a removable cover, so as to allow inspection and removal of material such as leaves or various debris.

EP3093545A1 discloses a pipe connection device for connecting two pipe ends arranged in an exhaust line of a combustion engine; the two pipe ends are provided, on the outer circumferential surface thereof, with respective raised spherical segments in a ring shape, which are accommodated in a connecting pipe which surrounds the pipe ends in an overlapping section such that the circumference of the raised spherical segments rests radially on an inner wall of the connecting pipe in a spherical-segment contact region.

DE2547755A1 discloses a pipe connection, in particular for plastic pipes for transporting wood, allowing connection of pipes which may be out of alignment, and which do not require a fluid tight seal. The connection comprises two half-shells which have two adjacent recesses, each curved according to a hollow spherical surface, and each pipe end has a spherically arched bead which engages in the respective recess of the half-shells.

The aim of the present invention is to solve the problems of the prior art described herein in a particularly simple and efficient manner.

In particular, the object of the invention is to provide a joint for water drainage systems in buildings, which allows misaligned pipe sections to be connected in a simple, fast, and effective manner, and is also simple and inexpensive to manufacture, simple and practical to install, and fully effective and durable in use.

### DISCLOSURE OF INVENTION

Therefore, the present invention relates to a joint for connecting two pipes of a water drainage system, in particular for water drainage systems in buildings, as defined in appended claim 1.

Preferred features of the invention are defined in the dependent claims.

The joint of the invention allows misaligned pipe sections to be connected in a simple, fast, and effective manner, and is also simple and inexpensive to manufacture, simple and practical to install, and fully effective and durable in use.

In addition to carrying out the function of correcting any misalignments on the building site between pipes to be connected, the joint of the invention is also able to absorb vibrations and/or movements of the structure, for example due to seismic events.

### BRIEF DESCRIPTION OF THE DRAWINGS

Further features and advantages of the present invention will be apparent from the following description of a non-limiting embodiment thereof, with reference to the figures of the accompanying drawings, wherein:
- Figure 1 is a side view of a joint for connecting two pipes of a water drainage system, in particular for water drainage systems in buildings, in accordance with the invention;
- Figure 2 is a longitudinal cross view of the joint in Figure 1;
- Figure 3 is an enlarged scale view of a detail of the section in Figure 1;
- Figure 4 is a side view of a component of the joint in Figure 1;
- Figure 5 is a perspective and cross-sectional view of the component in Figure 4;
- Figure 6 is a longitudinal cross view of the joint of the invention in use.

### PREFERRED EMBODIMENT OF THE INVENTION

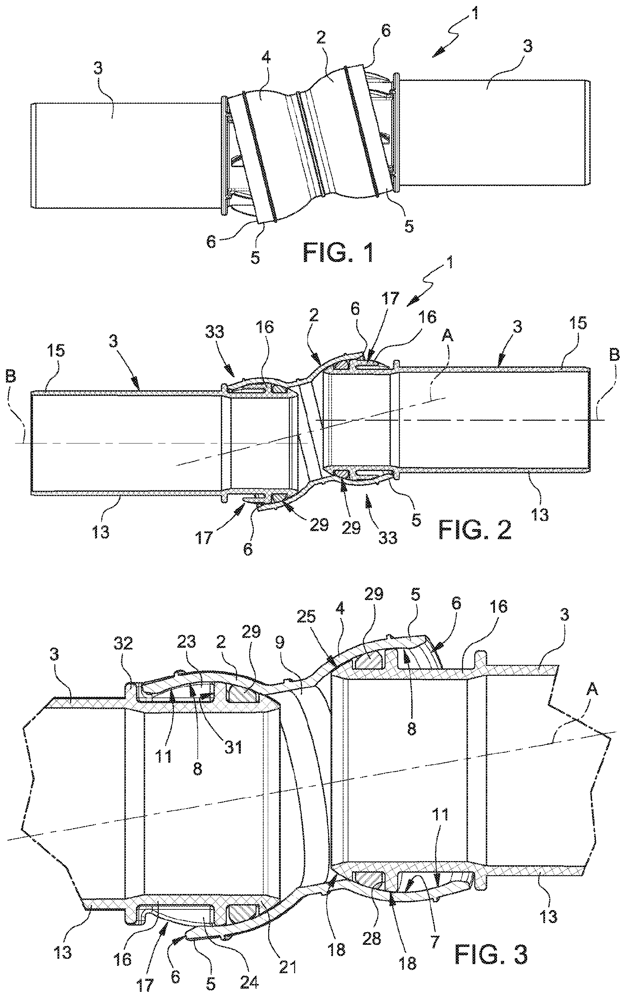

The numeral 1 in Figures 1 and 2 shows, as a whole, a joint for connecting two pipes of a water drainage system, in particular for water drainage systems in buildings.

The joint 1 comprises a central female element 2 and two lateral male elements 3, advantageously consisting of respective monolithic pieces, for example made of polymeric material.

The female element 2 consists of a hollow body 4 extending along and about a longitudinal axis A between two opposite open axial ends 5, having respective circular end front edges 6.

Also referring to Figure 3, the female element 2 is provided with an internal through cavity 7 extending along the axis A between the ends 5.

The cavity 7 comprises a pair of opposite coupling seats 8 and a central intermediate portion 9, located between the seats 8.

The seats 8 are arranged at respective ends 5 and have respective concave inner lateral surfaces 11, which are surfaces rotating about the axis A, for example shaped like a spherical portion.

The two seats 8 are joined by the central intermediate portion 9, which is, for example, substantially cylindrical.

The male elements 3 extend from respective ends 5 of the female element 2 along respective longitudinal axes B (Figure 2).

Each male element 3 has a tubular body 13 provided, at respective opposite longitudinal ends of the tubular body 13, with an insertion portion 15 for connection to an outer pipe section, and a coupling head 16 shaped to be housed in a rotatable manner in a respective seat 8.

In particular, the head 16 has an outer coupling surface 17 cooperating with the inner lateral surface 11 of a seat 8.

In the preferred embodiment shown, the surface 17 is not a continuous surface, but is formed by a plurality of surface portions 18 separated from one another.

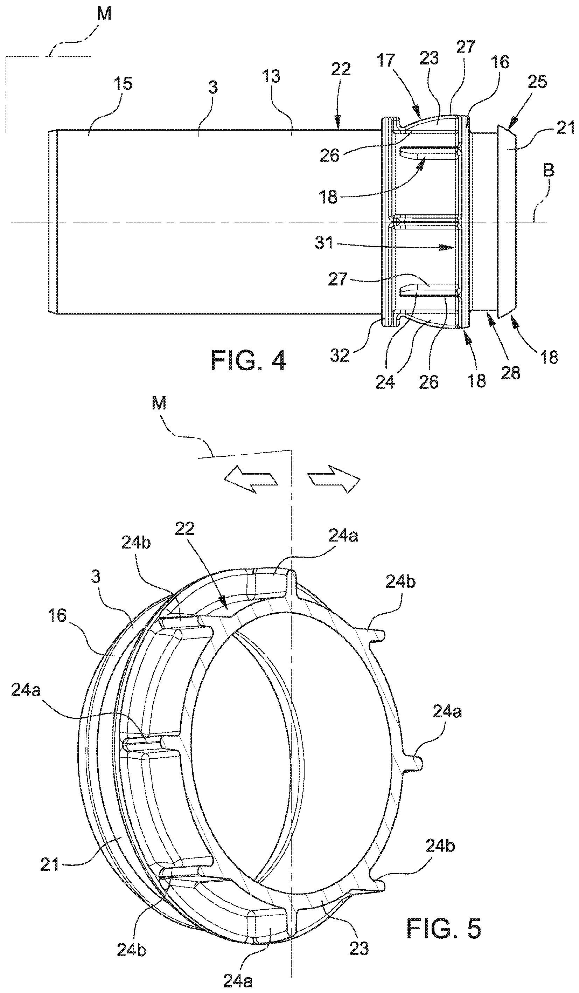

In particular, as shown in greater detail in Figures 3 and 4, the head 16 comprises an end annular part 21, positioned at a longitudinal end of the tubular body 13 and extending radially from an outer lateral base surface 22 of the tubular body 13 about the tubular body 13; and a rib part 23, positioned adjacent to the annular part 21 and formed by a plurality of longitudinal ribs 24 projecting from the base surface 22 and angularly spaced from one another on the tubular body 13.

In the example shown, the annular part 21 is shaped as a continuous ring closed in a loop about the tubular body 13. The annular part 21 has a radially outer annular surface 25, not only curved about the tubular body 13 but also curved in the longitudinal direction along the tubular body 13 and defining one or more surface portions 18 of the coupling surface 17 of the head 16.

The ribs 24 have respective root edges 26 joined to the base surface 22 and respective free profiles 27, opposite to the root edges 26 and shaped to define further respective surface portions 18 of the coupling surface 17, the surface portions 18 being angularly spaced from one another.

The profiles 27 are curved, for example shaped as an arc of a circle, in the longitudinal direction on the tubular body 13 and, preferably, are also curved about the tubular body 13.

The ribs 24 can have various shapes and sizes.

In the preferred embodiment shown, the ribs 24 are not all the same and have different inclinations with respect to the base surface 22.

In particular, also referring to Figure 5, each male element 3 has a first group of radial ribs 24a, extending perpendicular from the base surface 22; and one or more other groups of slanted ribs 24b, forming an angle other than 90° (or respective angles other than 90°) with the base surface 22. Preferably, the radial ribs 24a and slanted ribs 24b are arranged alternately along the circumference of the tubular body 13.

For example, the head 16 has four radial ribs 24a arranged as diametrically opposite pairs on the base surface 22 (i.e., arranged as 90° from each other on the base surface 22); and two pairs of slanted ribs 24b, positioned on opposite sides of respective diametrically opposed radial ribs 24a and parallel to one another and to a pair of radial ribs 24a.

The inclination of the slanted ribs 24b also allows an effective and easy opening of the manufacturing mould in which the tubular body 13 is made, as well as the extraction of the tubular body 13 from the mould, while still ensuring the necessary mechanical strength of the tubular body 13. It is in fact advantageous to make the tubular bodies 13 of the male elements 3, as well as the hollow body 4 of the female element, by moulding a suitable polymeric material. The ribs 24b define respective drafts in the mould opening direction, in order to facilitate the opening of the mould. In the case shown, for example, the mould is closed on the tubular body 13 along a middle plane M of the tubular body 13 (Figures 4 and 5) passing through the axis B and dividing in half a first pair of radial ribs 24a, and is perpendicular to the other pair of radial ribs 24a and to the slanted ribs 24b. The opening of the mould occurs along an opening direction, schematically represented by the arrows in Figure 5, which is therefore parallel to the slanted ribs 24b.

The ribs 24 are therefore oriented so as to be parallel to the middle plane M, i.e., to the mould closing plane (first pair of radial ribs 24a); or perpendicular thereto (second pair of radial ribs 24a and slanted ribs 24B) .

It is understood, however, that the ribs 24 can be organized differently from what is described and illustrated herein purely by way of example.

The ribs 24 may also have a different shape from each other.

The head 16 is provided with a circumferential annular groove 28 housing a radial sealing ring 29. For example, in the embodiment shown, the groove 28 is formed on the annular part 21 and divides the annular part 21 into two portions having respective annular surface portions 18.

It is understood, however, that the groove 28 housing the sealing ring 29 can be located in another position on the head 16, for example on the rib part 23.

In any case, the sealing ring 29, in undeformed conditions, projects radially from the groove 28 beyond the surface 17 so as to cooperate in a fluid-tight manner with the inner lateral surface 11 of the seat 8.

On each head 16, the ribs 24 are arranged longitudinally between a rear annular abutment 31 of the annular part 21 and a radially outer annular flange 32, which protrudes from the base surface 22 and defines a stop member cooperating with a front edge 6 of the female element 2.

The profiles 26 of the ribs 24 and the radially outer annular surface 25 of the annular part 21 define respective surface portions 18 of the coupling surface 17, coupled to the inner lateral surface 11 of the seats 8 so that each head 16 is rotatably housed in a respective seat 8, thus realizing a ball joint 33.

The joint 1 is therefore provided with two independent ball joints 33, defined by the heads 16 of the two male elements 3 and by the seats 8 of the female element 2.

In this way, both of the male elements 3, and therefore also the respective pipe sections connected thereto, can assume different orientations with respect to the female element 2, independently of each other, allowing the correction of any misalignments between the pipe sections connected by the joint 1. In particular, it is possible to keep the axes B of the male elements 3 parallel to but not aligned with each other.

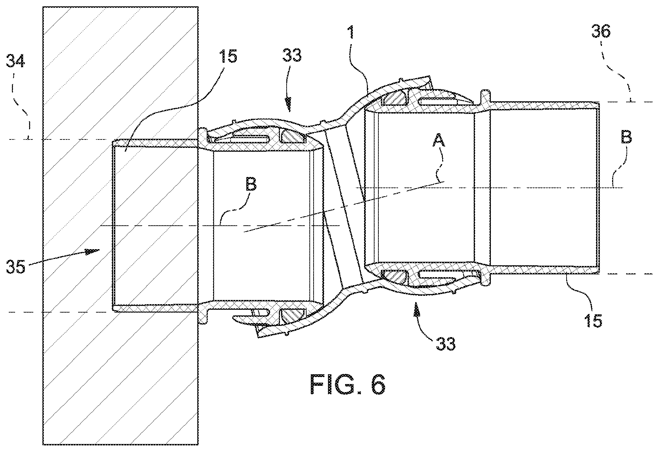

A preferred application for the joint 1 of the invention is illustrated in Figure 6.

The joint 1 is used to connect a bathroom's drain pipe 34 (known and only schematically shown in Figure 6), arranged through a bathroom wall 35, to a common drain column 36 (also known and only schematically shown in Figure 6), in particular to a T-fitting of the drain column 36, which collects waste water from a plurality of users in a building. The insertion portions 15 of the male elements 3 can be connected to the respective outer pipe sections in any known manner.

Lastly, it is understood that further modifications and variations can be made to the joint as described and illustrated herein without departing from the scope of the appended claims.

## Claims

1. A joint (1) for connecting two pipes of a water drainage system, in particular for water drainage systems in buildings, comprising a central female element (2), extending along an axis (A) and provided with a pair of axially opposed coupling seats (8), and two lateral male elements (3), extending from respective opposite axial ends (5) of the female element (2) and having respective tubular bodies (13); wherein the male elements (3) are connected to the female element (2) by respective independent ball joints (33), defined by respective heads (16) of the male elements (3) having respective outer coupling surfaces (17) cooperating with respective inner lateral surfaces (11) of respective seats (8) of the female element (2); **characterized in that** the coupling surface (17) of each head (16) of the male elements (3) is formed by a plurality of surface portions (18) separated from one another, and each head (16) comprises a rib part (23) formed by a plurality of longitudinal ribs (24) projecting from an outer lateral base surface (22) of the respective male element (3); the ribs (24) having respective root edges (26) joined to the base surface (22) and respective free profiles (27), opposite to the root edges (26) and shaped to define respective surface portions (18), angularly spaced from one another, of the coupling surface (17); and **in that** each male element (3) has a first group of radial ribs (24a), extending perpendicular from the base surface (22); and one or more other groups of slanted ribs (24b), forming an angle other than 90° or respective angles other than 90° with the base surface (22).

2. The joint according to claim 1, wherein said profiles (27) are curved, for example shaped as an arc of a circle, in the longitudinal direction on the tubular body (13) and also about the tubular body (13) of the respective male element (3).

3. The joint according to claim 1 or 2, wherein the head (16) comprises an end annular part (21), positioned at a longitudinal end of the tubular body (13) and extending radially from the base surface (22) about the tubular body (13) and adjacent to the rib part (23).

4. The joint according to claim 3, wherein the annular part (21) is shaped as a continuous ring closed in a loop about the tubular body (13) and has a radially outer annular surface (25) curved about the tubular body (13) and also curved in the longitudinal direction along the tubular body (13) and defining one or more first surface portions (18) of the coupling surface (17) of the head (16).

5. The joint according to one of the preceding claims, wherein radial ribs (24a) and slanted ribs (24b) are arranged alternately along the circumference of the tubular body (13).

6. The joint according to claim 5, wherein each head (16) has four radial ribs (24a) arranged as diametrically opposite pairs on the base surface (22); and two pairs of slanted ribs (24b), positioned on opposite sides of respective diametrically opposed radial ribs (24a) and parallel to one another and to said diametrically opposed radial ribs (24a).

7. The joint according to one of the preceding claims, wherein the ribs (24) are parallel to a middle plane (M) of the tubular body (13), or perpendicular thereto.

8. The joint according to one of the preceding claims, wherein each head (16) is provided with a circumferential annular groove (28) housing a radial sealing ring (29) cooperating in a fluid-tight manner with the inner lateral surface (11) of the respective seat (8) of the female element (2).

9. Use of a joint (1) according to one of the preceding claims to connect two pipes of a water drainage system, in particular a water drainage system of a building.

10. The use according to claim 9, wherein the joint (1) connects a bathroom drain pipe (34), arranged through a bathroom wall (35), to a common drain column (36) that collects waste water from a plurality of users of a building.

## Patentansprüche

1. Gelenk (1) zum Verbinden zweier Rohre eines Wasserablaufsystems, insbesondere für Wasserablaufsysteme in Gebäuden, umfassend ein zentrales Aufnahmeelement (2), das sich entlang einer Achse (A) erstreckt und mit einem Paar axial gegenüberliegender Kupplungssitze (8) versehen ist, und zwei seitliche Einsteckelemente (3), die sich von jeweils gegenüberliegenden axialen Enden (5) des Aufnahmeelements (2) erstrecken und jeweilige Rohrkörper (13) aufweisen; wobei die Einsteckelemente (3) mit dem Aufnahmeelement (2) durch jeweilige unabhängige Kugelgelenke (33) verbunden sind, die durch jeweilige Köpfe (16) der Einsteckelemente (3) definiert sind, die jeweilige äußere Kopplungsoberflächen (17) aufweisen, die mit jeweiligen inneren Seitenoberflächen (11) jeweiliger Sitze (8) des Aufnahmeelements (2) zusammenwirken; **dadurch gekennzeichnet, dass** die Kopplungsoberfläche (17) jedes Kopfes (16) der Einsteckelemente (3) durch eine Vielzahl von voneinander getrennten Oberflächenabschnitten (18) gebildet ist, und jeder Kopf (16) einen Rippenteil (23) umfasst, der durch eine Vielzahl von Längsrippen (24) gebildet ist, die von einer äußeren seitlichen Basisoberfläche (22) des jeweiligen Einsteckelements (3) vorstehen; wobei die Rippen (24) jeweilige Wurzelkanten (26), die mit der Basisoberfläche (22) verbunden sind, und jeweilige freie Profile (27) aufweisen, die den Wurzelkanten (26) gegenüberliegen und so geformt sind, dass sie jeweilige Oberflächenabschnitte (18) der Kopplungsoberfläche (17) definieren, die winkelmäßig voneinander beabstandet sind; und dadurch, dass jedes Einsteckelement (3) eine erste Gruppe von radialen Rippen (24a) aufweist, die sich senkrecht von der Basisoberfläche (22) erstrecken; und eine oder mehrere andere Gruppen von schrägen Rippen (24b), die einen anderen Winkel als 90° oder jeweilige andere Winkel als 90° mit der Basisoberfläche (22) bilden.

2. Gelenk nach Anspruch 1, wobei die Profile (27) sowohl am Rohrkörper (13) als auch um den Rohrkörper (13) des jeweiligen Einsteckelements (3) in Längsrichtung gekrümmt, beispielsweise kreisbogenförmig ausgebildet sind.

3. Gelenk nach Anspruch 1 oder 2, wobei der Kopf (16) einen ringförmigen Endteil (21) umfasst, der an einem Längsende des Rohrkörpers (13) positioniert ist und sich radial von der Basisoberfläche (22) um den Rohrkörper (13) und benachbart zu dem Rippenteil (23) erstreckt.

4. Gelenk nach Anspruch 3, wobei der ringförmige Teil (21) als ein durchgehender Ring geformt ist, der in einer Schleife um den Rohrkörper (13) geschlossen ist und eine radial äußere ringförmige Oberfläche (25) aufweist, die um den Rohrkörper (13) gekrümmt ist und auch in Längsrichtung entlang des Rohrkörpers (13) gekrümmt ist und einen oder mehrere erste Oberflächenabschnitte (18) der Kopplungsoberfläche (17) des Kopfes (16) definiert.

5. Gelenk nach einem der vorhergehenden Ansprüche, wobei entlang des Umfangs des Rohrkörpers (13) abwechselnd radiale Rippen (24a) und schräge Rippen (24b) angeordnet sind.

6. Gelenk nach Anspruch 5, wobei jeder Kopf (16) vier radiale Rippen (24a) aufweist, die als diametral gegenüberliegende Paare auf der Basisoberfläche (22) angeordnet sind; und zwei Paare von schrägen Rippen (24b), die auf gegenüberliegenden Seiten von jeweiligen diametral gegenüberliegenden radialen Rippen (24a) und parallel zueinander und zu den diametral gegenüberliegenden radialen Rippen (24a) positioniert sind.

7. Gelenk nach einem der vorhergehenden Ansprüche, wobei die Rippen (24) parallel zu einer Mittelebene (M) des Rohrkörpers (13) oder senkrecht dazu sind.

8. Gelenk nach einem der vorhergehenden Ansprüche, wobei jeder Kopf (16) mit einer umlaufenden Ringnut (28) versehen ist, die einen radialen Dichtring (29) aufnimmt, der fluiddicht mit der inneren Seitenoberfläche (11) des jeweiligen Sitzes (8) des Aufnahmeelements (2) zusammenwirkt.

9. Verwendung eines Gelenks (1) nach einem der vorhergehenden Ansprüche zum Verbinden zweier Rohre eines Wasserablaufsystems, insbesondere eines Wasserablaufsystems eines Gebäudes.

10. Verwendung nach Anspruch 9, wobei das Gelenk (1) ein Badezimmerablaufrohr (34), das durch eine Badezimmerwand (35) angeordnet ist, mit einer gemeinsamen Ablaufsäule (36) verbindet, die Abwasser von einer Vielzahl von Benutzern eines Gebäudes sammelt.

## Revendications

1. Joint (1) pour relier deux tuyaux d'un système de drainage d'eau, en particulier pour les systèmes de drainage d'eau dans les bâtiments, comprenant un élément central femelle (2), s'étendant le long d'un axe (A) et pourvu d'une paire de sièges d'accouplement (8) axialement opposés, et deux éléments latéraux mâles (3), s'étendant à partir des extrémités axiales opposées (5) respectives de l'élément femelle (2) et comportant des corps tubulaires (13) respectifs ; les éléments mâles (3) étant reliés à l'élément femelle (2) par des joints à rotule indépendants (33) respectifs, définis par les têtes (16) respectives des éléments mâles (3) comportant des surfaces d'accouplement extérieures (17) respectives coopérant avec les surfaces latérales intérieures (11) respectives des sièges (8) respectifs de l'élément femelle (2) ; **caractérisé en ce que** la surface d'accouplement (17) de chaque tête (16) des éléments mâles (3) est formée par une pluralité de parties de surface (18) séparées les unes des autres, et chaque tête (16) comprend une partie nervurée (23) formée par une pluralité de nervures longitudinales (24) faisant saillie à partir d'une surface de base latérale extérieure (22) de l'élément mâle (3) respectif ; les nervures (24) comportant des bords racines (26) respectifs reliés à la surface de base (22) et des profilés libres (27) respectifs, opposés aux bords racines (26) et façonnés pour définir des parties de surface (18) respectives, angulairement espacées les unes des autres, de la surface d'accouplement (17) ; et **en ce que** chaque élément mâle (3) comporte un premier groupe de nervures radiales (24a), s'étendant perpendiculairement à la surface de base (22) ; et un ou plusieurs autres groupes de nervures inclinées (24b), formant un angle autre que 90° ou des angles respectifs autres que 90° avec la surface de base (22)

2. Joint selon la revendication 1, lesdits profilés (27) étant incurvés, par exemple en forme d'arc de cercle, dans la direction longitudinale sur le corps tubulaire (13) et également autour du corps tubulaire (13) de l'élément mâle (3) respectif.

3. Joint selon la revendication 1 ou 2, la tête (16) comprenant une partie annulaire d'extrémité (21), positionnée à une extrémité longitudinale du corps tubulaire (13) et s'étendant radialement à partir de la surface de base (22) autour du corps tubulaire (13) et adjacente à la partie nervurée (23) .

4. Joint selon la revendication 3, la partie annulaire (21) ayant la forme d'un anneau continu fermé dans une boucle autour du corps tubulaire (13) et ayant une surface annulaire radialement extérieure (25) incurvée autour du corps tubulaire (13) et également incurvée dans la direction longitudinale le long du corps tubulaire (13) et définissant une ou plusieurs premières parties de surface (18) de la surface d'accouplement (17) de la tête (16).

5. Joint selon l'une des revendications précédentes, des nervures radiales (24a) et des nervures inclinées (24b) étant disposées en alternance le long de la circonférence du corps tubulaire (13).

6. Joint selon la revendication 5, chaque tête (16) comportant quatre nervures radiales (24a) disposées en paires diamétralement opposées sur la surface de base (22) ; et deux paires de nervures inclinées (24b), positionnées sur les côtés opposés des nervures radiales (24a) diamétralement opposées et parallèles les unes aux autres et auxdites nervures radiales (24a) diamétralement opposées.

7. Joint selon l'une des revendications précédentes, les nervures (24) étant parallèles à un plan médian (M) du corps tubulaire (13), ou perpendiculaires à celui-ci.

8. Joint selon l'une des revendications précédentes, chaque tête (16) étant pourvue d'une rainure annulaire circonférentielle (28) logeant une bague d'étanchéité radiale (29) coopérant de manière étanche avec la surface latérale intérieure (11) du siège (8) respectif de l'élément femelle (2).

9. Utilisation d'un joint (1) selon l'une des revendications précédentes pour relier deux tuyaux d'un système de drainage d'eau, notamment d'un système de drainage d'eau d'un bâtiment.

10. Utilisation selon la revendication 9, le joint (1) reliant un tuyau de drainage de salle de bains (34), disposé à travers un mur de salle de bains (35), à une colonne de drainage commune (36) qui collecte les eaux usées, d'une pluralité d'utilisateurs, d'un bâtiment.
